# EUROPEAN PATENT APPLICATION

(11) **EP 1 462 984 A2**
(43) Date of publication of application: **29.09.2004**
(21) Application number: 04007384.3
(22) Date of filing: 26.03.2004
(51) Int. Cl.: G06K 9/00

(54) **Authentication object image pick-up device and method thereof**

(30) Priority: 27.03.2003 JP 2003088053
(71) Applicant: MATSUSHITA ELECTRIC INDUSTRIAL CO., LTD., Kadoma-shi, Osaka 571-8501 (JP)
(72) Inventor: Doi, Makoto, Ishikawa-gun Ishikawa 921-8806 (JP); Ikoma, Ken, Yokohama-shi Kanagawa 225-0023 (JP); Wakiyama, Koji, Yokohama-shi Kanagawa 227-0063 (JP)
(74) Representative: Holmes, Miles

(57) **Abstract**

The present invention provides an authentication object image pick-up device including: a camera 3 for picking up a face image of a person to be authenticated; a camera 2 being pointed at a direction of an eye of the authenticated person obtained by analyzing the face image picked up by the camera 3 and picking up an iris image of the authenticated person; a camera 9 for picking up an image of a circumference of places in which the camera 3 and the camera 2 are disposed; and control section 14 for analyzing an image picked up by the camera 9 to obtain a position of a face of the authenticated person and pointing the direction of the camera 3 at a position of the face of the authenticated person before the person enters a shooting range of the camera 3.

## Description

### Background of the Invention

### Field of the Invention

The present invention relates to an authentication object image pick-up device for acquiring any of an iris pattern, a retina pattern and a face feature pattern to be biological information of a person to be authenticated and a method thereof, and particularly to a suitable authentication object image pick-up device for shortening a time taken for acquiring a biological information image to reduce the standby time of the authenticated person and a method thereof.

### Description of the Related Art

There has been known a conventional iris image pick-up device described in the Patent Document 1 (JP-A-2002-122899). The conventional art in the Patent Document 1 will be described with reference to Figs. 6 and 7. The conventional iris image pick-up device comprises an iris image pick-up camera 102 formed by a telephoto camera for picking up the image of the iris of an object (a person to be authenticated), a face image pick-up camera 103 for picking up the face image of the object, a distance measuring sensor 104 for measuring a distance to the object, a turntable 105 for mounting the cameras 102 and 103 and the distance measuring sensor 104, a tilt motor 107 for tilt turning the turntable 105, a mirror 111 provided in the front part of the iris image pick-up camera 102 and serving to turn the optical axis of the lens of the camera 102 toward the iris of the object, a pan motor 106 for pan turning the mirror 111, a motor driver 110 for driving the motors 106 and 107, an internal image processing section 109 for detecting the position of an eye from the face image shot by the camera 103 and extracting an iris pattern from an iris image shot by the camera 102, a leading section 108 for leading the position of the eye of the object to the positions of the optical axes of the lenses of the cameras 102 and 103, and a control section 112 for controlling them.

In such a conventional iris image pick-up device, when the distance measuring sensor 104 is turned downward by the tilt motor 107 to continuously measure a distance and to detect that the object approaches and enters the shooting range of the face image pick-up camera 103, the tilt motor 107 is turned to point the face image pick-up camera 103 toward a front, thereby picking up the face image of the object. By carrying out an image processing over the obtained face image through the image processing section 109, the position of the eye of the object is detected and the pan motor 106 and the tilt motor 107 are turned to point the optical axis of the lens of the iris image pick-up camera 102 toward the iris of the object, thereby acquiring the iris image of the object which is suitable for an authentication processing.

In the conventional iris image pick-up device, however, the distance measuring sensor 104 is also used as a proximity sensor and the turntable 105 is to be previously held and put in a downward direction which is different from an image pick-up direction. Therefore, the turntable 105 is not driven into an image pick-up state until it is detected that the object enters the shooting range. Then, an image is picked up by the face image pick-up camera 103.

In order to pick up the image of the iris of the object by the iris image pick-up camera 102, moreover, the iris image can be picked up when the face image picked up by the face image pick-up camera 103 is previously analyzed and the position of an eye is calculated. Consequently, there is a problem in that a time is taken for picking up the iris image to be a certifying object, resulting in an increase in a time for an authenticated person to stand by.

### Summary of the Invention

The invention has been made in order to solve the conventional problems and has an object to provide an authentication object image pick-up device capable of shortening a time taken for picking up an authentication object image of an authenticated person and a method thereof.

The invention provides an authentication object image pick-up device comprising face image pick-up device for picking up a face image of a person to be authenticated, eye image pick-up device for being pointed at a direction of an eye of the authenticated person which is obtained by analyzing the face image of the authenticated person which is picked up by the face image pick-up device, thereby picking up an eye image of the authenticated person, monitoring image pick-up device for picking up an image of a circumference of places in which the face image pick-up device and the eye image pick-up device are provided, and control section for analyzing an image picked up by the monitoring image pick-up device to obtain a position of a face of the authenticated person, and pointing an image pick-up direction of the face image pick-up device at a direction of a position of the face before the authenticated person enters a shooting range of the face image pick-up device.

By this structure, the direction of the face image pick-up device is pointed at such a direction as to aim at the face of the authenticated person in the previous stage of image pick-up before the authenticated person enters the shooting range of the face image pick-up device. Therefore, the face image can be picked up immediately when the authenticated person enters the shooting range. Consequently, it is possible to shorten a time taken for acquiring the eye image.

The invention provides an authentication object image pick-up device comprising eye image pick-up device for picking up an eye image of a person to be authenticated, monitoring image pick-up device for picking up an image of a circumference of a place in which the eye image pick-up device is provided, and control section for analyzing an image picked up by the monitoring image pick-up device to obtain a position of an eye of the authenticated person, and pointing an image pick-up direction of the eye image pick-up device at a direction of a position of the eye before the authenticated person enters a shooting range of the eye image pick-up device.

By this structure, the direction of the eye image pick-up device is pointed at such a direction as to aim at the eye of the authenticated person in the previous stage of image pick-up before the authenticated person enters the shooting range of the eye image pick-up device. Therefore, the eye image can be picked up immediately when the authenticated person enters the shooting range, and furthermore, the face image pick-up device is not used. Consequently, it is possible to considerably shorten a time taken for acquiring the eye image.

The authentication object image pick-up device according to the invention is characterized in that the control section obtains the position of the eye of the authenticated person from a position of a head top portion of the authenticated person which is acquired from the image picked up by the monitoring image pick-up device and information about a distance to the authenticated person which is acquired by distance measuring device.

By this structure, it is possible to obtain the position of the eye with high precision based on statistical information about the configuration of the face even if the face image pick-up device is not used.

The authentication object image pick-up device according to the invention is characterized in that the control section obtains the position of the eye from a position of a head top portion of the authenticated person which is acquired from the image picked up by the monitoring image pick-up device and a position of a shoulder or an ear of the authenticated person.

By this structure, similarly, it is possible to obtain the position of the eye with high precision without the face image pick-up device.

The authentication object image pick-up device according to the invention is characterized in that the control section extracts an iris pattern or a retina pattern from the eye image.

By this structure, the authentication object image pick-up device according to the invention can be applied to an iris certifying device or a retina pattern certifying device.

The invention provides an authentication object image pick-up device comprising face image pick-up device for picking up a face image of a person to be authenticated, monitoring image pick-up device for picking up an image of a circumference of a place in which the face image pick-up device is provided, and control section for analyzing an image picked up by the monitoring image pick-up device to obtain a position of a face of the authenticated person, and pointing an image pick-up direction of the face image pick-up device at a direction of a position of the face before the authenticated person enters a shooting range of the face image pick-up device.

By this structure, the direction of the face image pick-up device is pointed at such a direction as to aim at the face of the authenticated person in the previous stage of image pick-up before the authenticated person enters the shooting range of the face image pick-up device. Therefore, the face image can be picked up immediately when the authenticated person enters the shooting range. Consequently, it is possible to shorten a time taken for the authenticated person to stand by.

The authentication object image pick-up device according to the invention is characterized in that the control section extracts the face feature pattern from the face image.

By this structure, the authentication object image pick-up device according to the invention can be applied to a certifying device using the face feature pattern.

The invention provides an authentication object image pick-up method comprising the steps of picking up, by monitoring image pick-up device, an image of a circumference of a place in which face image pick-up device for picking up a face image of a person to be authenticated is provided, analyzing the image picked up by the monitoring image pick-up device to obtain a position of a face of the authenticated person, pointing an image pick-up direction of the face image pick-up device at a direction of the position of the face before the authenticated person enters a shooting range of the face image pick-up device, picking up a face image of the authenticated person by the face image pick-up device immediately when the authenticated person enters the shooting range, and analyzing the face image of the authenticated person which is picked up by the face image pick-up device and picking up, by eye image pick-up device, an eye image of the authenticated person which is obtained.

By this structure, the direction of the face image pick-up device is pointed at such a direction as to aim at the face of the authenticated person in the previous stage of image pick-up before the authenticated person enters the shooting range of the face image pick-up device. Therefore, the face image can be picked up immediately when the authenticated person enters the shooting range. Consequently, it is possible to shorten a time taken for acquiring the eye image.

The invention provides, an authentication object image pick-up method comprising the steps of picking up, by monitoring image pick-up device, an image of a circumference of a place in which eye image pick-up device for picking up an eye image of a person to be authenticated is provided, analyzing the image picked up by the monitoring image pick-up device to obtain a position of an eye of the authenticated person, pointing an image pick-up direction of the eye image pick-up device at a direction of the position of the eye before the authenticated person enters a shooting range of the eye image pick-up device, and picking up an eye image of the authenticated person by the eye image pick-up device immediately when the authenticated person enters the shooting range.

By this structure, the direction of the eye image pick-up device is pointed at such a direction as to aim at the eye of the authenticated person in the previous stage of image pick-up before the authenticated person enters the shooting range of the eye image pick-up device. Therefore, the eye image can be picked up immediately when the authenticated person enters the shooting range, and furthermore, the face image pick-up device is not used. Consequently, it is possible to considerably shorten a time taken for acquiring the eye image.

The authentication object image pick-up method according to the invention is characterized in that the position of the eye of the authenticated person is obtained from a position of a head top portion of the authenticated person which is acquired from the image picked up by the monitoring image pick-up device and information about a distance to the authenticated person which is acquired by distance measuring device.

By this structure, it is possible to obtain the position of the eye with high precision based on statistical information about the configuration of the face even if the face image pick-up device is not used.

The authentication object image pick-up method according to the invention is characterized in that the position of the eye is obtained from a position of a head top portion of the authenticated person which is acquired from the image picked up by the monitoring image pick-up device and a position of a shoulder or an ear of the authenticated person.

By this structure, similarly, it is possible to obtain the position of the eye with high precision without the face image pick-up device.

The invention provides an authentication object image pick-up method, wherein an iris pattern or a retina pattern is extracted from the eye image.

By this structure, the authentication object image pick-up method according to the invention can be applied to an iris certifying device or a certifying device using the retina pattern.

The invention provides an authentication object image pick-up method comprising the steps of picking up, by monitoring image pick-up device, an image of a circumference of a place in which face image pick-up device for picking up a face image of a person to be authenticated is provided, analyzing the image picked up by the monitoring image pick-up device to obtain a position of a face of the authenticated person, pointing an image pick-up direction of the eye image pick-up device at a direction of the position of the face before the authenticated person enters a shooting range of the face image pick-up device, and picking up a face image of the authenticated person by the face image pick-up device immediately when the authenticated person enters the shooting range.

By this structure, the direction of the face image pick-up device is pointed at such a direction as to aim at the face of the authenticated person in the previous stage of image pick-up before the authenticated person enters the shooting range of the face image pick-up device. Therefore, the face image can be picked up immediately when the authenticated person enters the shooting range. Consequently, it is possible to shorten a time taken for the authenticated person to stand by.

The invention provides an authentication object image pick-up method, wherein a face feature pattern is extracted from the face image.

By this structure, the authentication object image pick-up method according to the invention can be applied to a certifying device for carrying out a personal certification based on the face feature pattern.

### Brief Description of the Drawings

Fig. 1 is a view showing the structure of an iris image pick-up device according to a first embodiment of the invention;
Fig. 2 is a diagram showing the functional structure of the iris image pick-up device according to the first embodiment of the invention;
Fig. 3 is a diagram for explaining the operation of the iris image pick-up device according to the first embodiment of the invention;
Fig. 4 is a view showing an example of an image processing in the iris image pick-up device according to the first embodiment of the invention;
Fig. 5 is a diagram for explaining the operation of an iris image pick-up device according to a second embodiment of the invention;

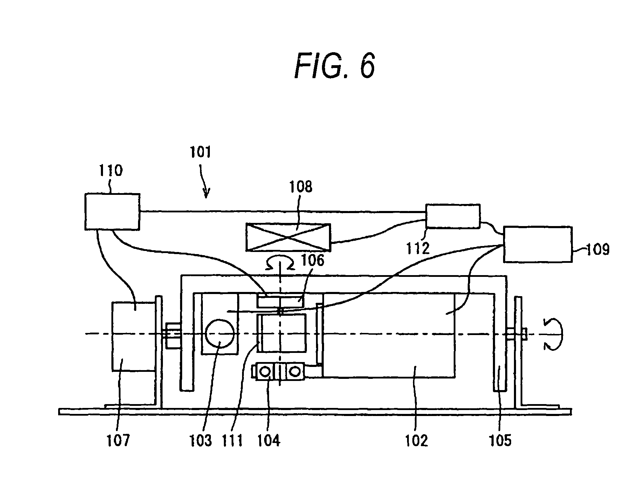

Fig. 6 is a view showing the structure of a conventional iris image pick-up device; and

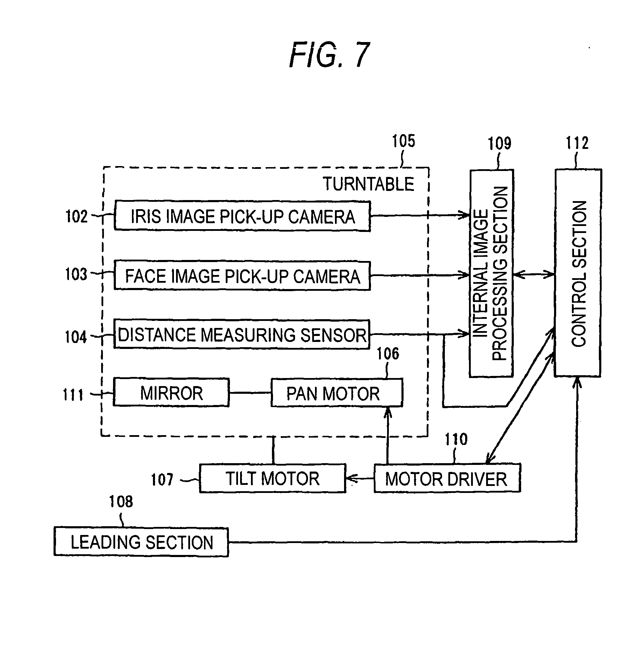

Fig. 7 is a diagram showing the functional structure of the conventional iris image pick-up device..

In the drawings, a reference numeral 1 refers to an iris image pick-up device; 2 to an iris image pick-up camera; 3 to a face image pick-up camera; 4 to a distance measuring sensor; 5 to a turntable; 6 to a pan motor; 7 to a tilt motor; 8 to a leading section; 9 to a monitoring camera; 10 to an external image processing section; 11 to an internal image processing section; 12 to a motor driver; 13 to a mirror; and 14 to a control section.

### Detailed Description of the Preferred Embodiments

An embodiment of the invention will be described below with reference to the drawings. While the description will be given to an example in which an iris image is acquired as biological information in the following embodiment, the invention can also be applied to the acquirement of other biological information, for example, a retina image for extracting a retina pattern and a face image for extracting a face feature pattern.

### (First Embodiment)

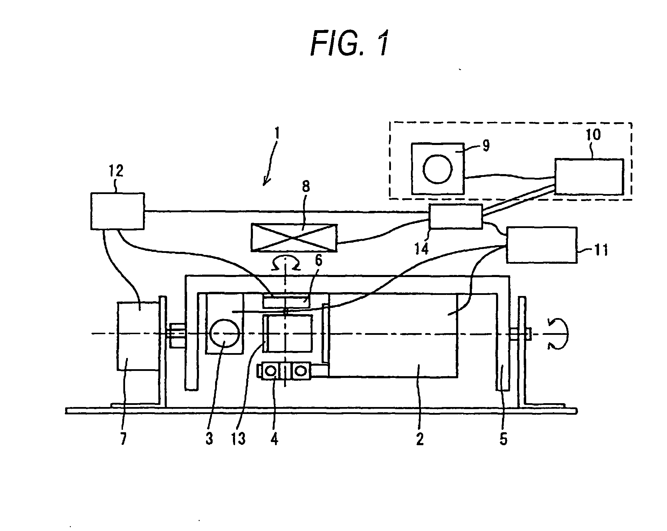

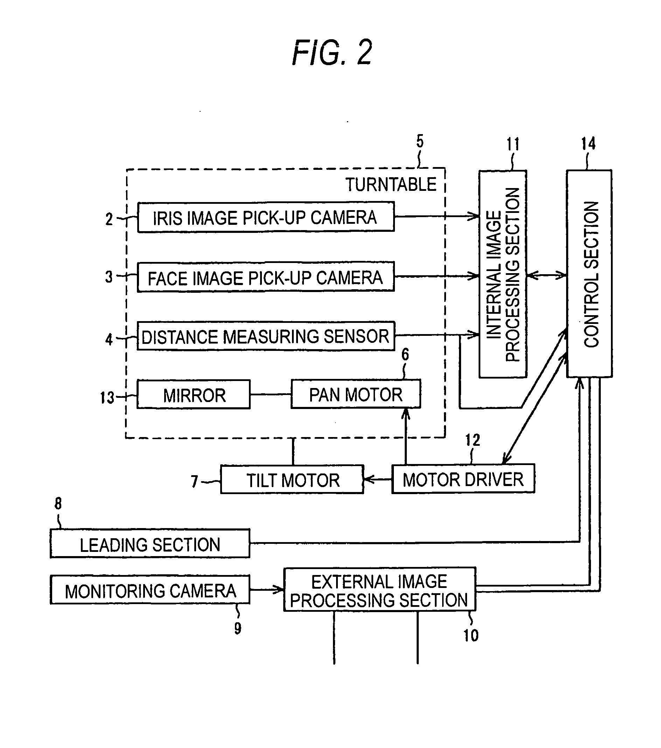

Fig. 1 is a view showing the structure of an iris image pick-up device according to a first embodiment of the invention, and Fig. 2 is a diagram showing a functional structure thereof. An iris image pick-up device 1 according to the embodiment comprises an iris image pick-up camera 2 formed by a telephoto camera for picking up the image of an iris, a face image pick-up camera 3 for picking up the face image of an object within pan and tilt operation ranges, a distance measuring sensor 4 for measuring a distance between the iris image pick-up camera 2 and the object, a turntable 5 for mounting the iris image pick-up camera 2, the face image pick-up camera 3 and the distance measuring sensor 4, a mirror 13 provided on the optical axis of the iris image pick-up camera 2 and having a rotating axis which is parallel with the direction of the vertical axis of the iris image pick-up camera 2, a pan motor 6 for turning the mirror 13 in a target direction, a tilt motor 7 for turning the turntable 5 in a target direction, and a leading section 8 for leading the object to the shooting range of the iris image pick-up camera 2.

The iris image pick-up device 1 according to the embodiment further comprises a monitoring camera 9 mounting a wide angle lens for always monitoring the circumference of a place in which the iris image pick-up device 1 body is provided, an external image processing section 10 for storing and processing the image shot by the monitoring camera 9 and extracting the image of a person in the image which is picked up, an internal image processing section 11 for processing the image picked up by the face image pick-up camera 3 to calculate the position of the eye of the object and for processing the image picked up by the iris image pick-up camera 2 to extract the iris pattern of the object, a motor driver 12 for calculating a turning angle for turning the optical axis of the mirror 13, that is, the iris image pick-up camera 2 toward a target coordinate obtained by the processing of the internal image processing section 11, computing a coordinate transformation for adapting the mutual coordinates of the monitoring camera 9 and the face image pick-up camera 3 and driving the motors 6 and 7 based on an instruction signal calculating the turning angles of the pan motor 6 and the tilt motor 7, and a control section 14 for controlling these operations and generating the instruction signal.

While the external image processing section 10 and the internal image processing section 11 are separately provided in the embodiment, these may be integrated with each other. Furthermore, the processing sections 10 and 11 and the control section 14 may be integrated with each other. In addition, the monitoring camera 9 to be fixed and provided has a clear relative positional relationship with the iris image pick-up device 1 to be fixed and provided. Therefore, the relative positional relationship between the monitoring camera 9 and the iris image pick-up camera 2 and face image pick-up camera 3 is also clear so that the mutual coordinate transformation can easily be carried out. For this reason, the monitoring camera 9 does not need to be accommodated in the same housing as the iris image pick-up device 1 body but may be provided in another portion.

Furthermore, the external image processing section 10 can take a time difference between images sent from the monitoring camera 9, thereby catching the image of a moving object, for example. It is assumed that teaching is previously carried out in such a manner that the image of the moving object can be decided to be the image of a person when the image of the moving object satisfies predetermined conditions.

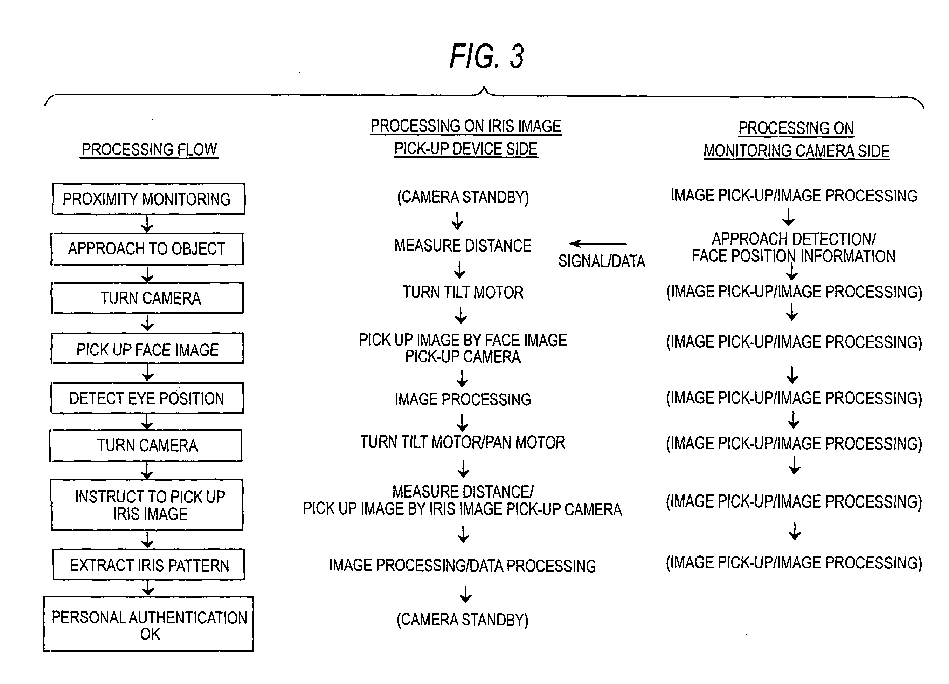

Fig. 3 is a diagram for explaining the operation of the iris image pick-up device 1 having the structure described above. The monitoring camera 9 periodically fetches the image of the circumference of the place in which the iris image pick-up device 1 is provided and always carries out monitoring whether a person to be authenticated is present before the iris image pick-up device 1 or not. Moreover, it is assumed that the turntable 5 of the iris image pick-up device 1 mounting the iris image pick-up camera 2, the face image pick-up camera 3 and the distance measuring sensor 4 stands by as a specified position in such a direction that a person can statistically stand most easily.

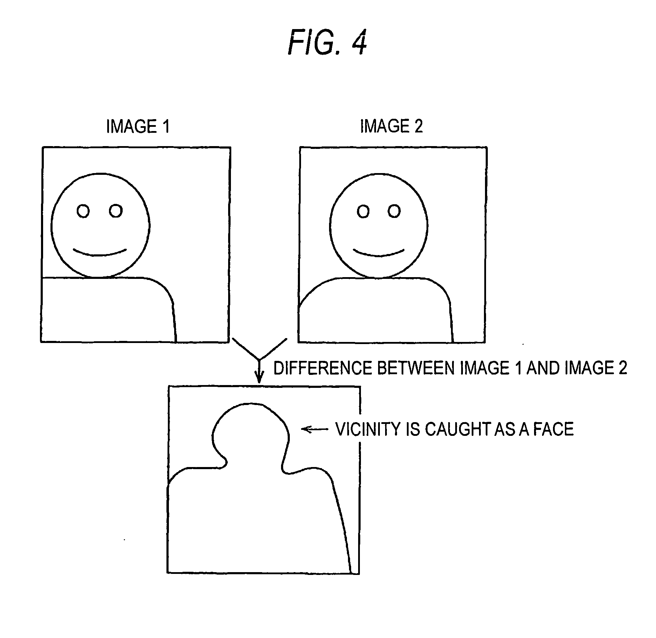

It is assumed that the authenticated person enters the shooting range of the monitoring camera 9 in accordance with the leading section 8. As a matter of course, the shooting range of the monitoring camera 9 is larger than each of the shooting ranges of the cameras 2 and 3. At this time, the image picked up by the monitoring camera 9 is fetched into the external image processing section 10 and a time difference between continuous pick-up images is taken, for example. Consequently, the image of a moving person is detected in silhouette as shown in Fig. 4.

The external image processing section 10 processes the silhouette image. If an elliptical portion in the upper part of the silhouette image is previously taught as a "head top", for example, the rough position of a head can be estimated. By turning the tilt motor 7 to point the face image pick-up camera 3 at the direction of the head, that is, the face the moment that the object enters the pan and tilt operation ranges of the face image pick-up camera 3, it is possible to pick up the face image of the object.

The face image of the object which is picked up is transmitted to the internal image processing section 11 and is processed therein. At this time, the coordinates of the position of the eye of the object are calculated. The position of the eye is calculated by using a triangulation principle based on the coordinates thus calculated and information about a distance to the object which is measured in advance.

In order to point the iris image pick-up camera 2 at the direction of the position of the eye which is calculated, next, an angle instruction is given to the pan motor 6 and the tilt motor 7 by device of the motor driver 12 to turn the mirror 13, thereby opposing the optical axis of the iris image pick-up camera 2 to the eye of the object, that is, the direction of an iris. After the operation is ended, an image pick-up instruction is given to the iris image pick-up camera 2. Consequently, the iris image pick-up camera 2 picks up the iris image of the object and transfers the same iris image to the internal image processing section 11. The internal image processing section 11 extracts an iris pattern from an iris image, generates code data to be used for a personal certification and transfers an iris certification code to an authentication processing section which is not shown.

As described above, according to the iris image pick-up device in accordance with the first embodiment, the position of the face or eye of the object can be obtained from the image picked up by the monitoring camera 9 and the image pick-up direction of the face image pick-up camera 3 or the iris image pick-up camera 2 can be changed, and the entrance of the object into the pan and tilt ranges of the camera can be confirmed through the image picked up by the monitoring camera 9 without using the distance measuring sensor 4 or another external sensor. More specifically, the directions of the face image pick-up camera 3 and the iris image pick-up camera 2 can be therefore pointed at the direction before..the object enters the shooting ranges of the cameras 2 and 3. Consequently, it is possible to shorten a time taken for picking up the iris image required for the authentication processing.

For the same reasons, moreover, an image can be picked up in such a manner that the center of a face is taken in the vicinity of a center in which the distortion of the lens of the face image pick-up camera 3 is small. Consequently, it is also possible to obtain such an advantage that an eye position detecting performance for picking up the iris image by the subsequent iris image pick-up camera 2 can further be enhanced.

### (Second Embodiment)

Next, description will be given to an iris image pick-up device according to a second embodiment of the invention. In the iris image pick-up device 1 according to the first embodiment, both the face image pick-up camera 3 and the iris image pick-up camera 2 are mounted on the device body, the direction of the head position of the object is analyzed from the image picked up by the monitoring camera 9 and the face image pick-up camera 3 is previously pointed at the direction of the face of the object, and the iris position of the object is then analyzed from the image picked up by the camera 3 and the iris image pick-up camera 2 is pointed at the direction of the eye of the object.

However, the image picked up by the monitoring camera 9 is analyzed in detail. Consequently, only the iris image pick-up camera 2 is mounted without the provision of the face image pick-up camera 3 in the iris image pick-up device body, and the position of the eye of the object is analyzed from the image picked up by the monitoring camera, and the iris image pick-up camera 2 is previously controlled to be pointed at the direction of the eye of the object. Thus, it is possible to further shorten a time taken for picking up the image of an iris.

In the iris image pick-up device according to the second embodiment, therefore, the position coordinates of the eye of an object are calculated by using information about the rough position of the face which is obtained in the first embodiment and information about a distance to the object which is obtained by a distance measuring sensor 4, and at least one of a pan motor 6 and a tilt motor 7 is turned, thereby starting to pick up the iris image of the object by device of the iris image pick-up camera 2 simultaneously with the entrance of the object into the pan and tilt operation ranges of the iris image pick-up camera 2.

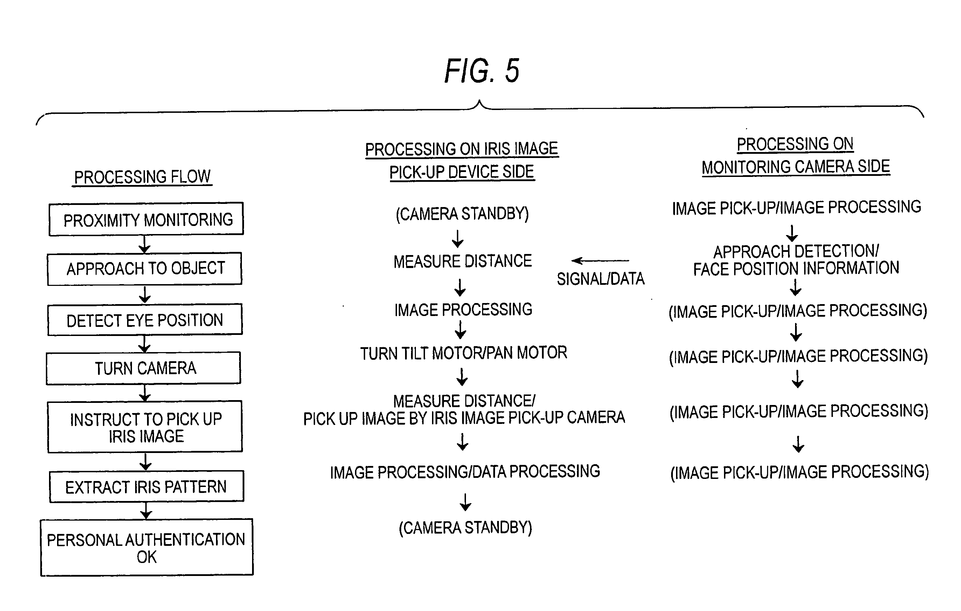

Fig. 5 is a diagram for explaining a procedure for the operation of the iris image pick-up device according to the embodiment. The structure of the iris image pick-up device according to the embodiment is the same as that of the iris image pick-up device according to the first embodiment in Fig. 1 and is different therefrom only in that the face image pick-up camera 3 is not provided.

In the same method as that in the first embodiment, when the object is led by a leading section 8 and enters the pan and tilt operation ranges of the monitoring camera 9, the position of the head of the object in a pick-up image can be estimated as described with reference to Fig. 4. At this time, the distance measuring sensor 4 is also operated to measure a distance to the object.

Although the size of a human face has a variation, a position from a head top to an eye is obtained almost statistically. By using information about the position of a head top and a measured distance, therefore, it is possible to estimate the position of the eye. The pan motor 6 and the tilt motor 7 are turned to point the optical axis of the camera 2 at the direction of the position of the eye, that is, the iris of the object the moment that the object enters the pan and tilt operation ranges of the iris image pick-up camera 2, and the iris image of the object is picked up by the iris image pick-up camera 2. Consequently, it is possible to shorten a time taken from the entrance of the object into a shooting range to the actual acquirement of an iris image for an authentication.

As described above, according to the iris image pick-up device in accordance with the second embodiment of the invention, the position of the eye of the object is calculated from the position of the head top portion of the object which is obtained by the monitoring camera 9 and the information about the distance to the object which is acquired by the distance measuring sensor 4, thereby changing the image pick-up direction of the iris image pick-up camera 2, and the iris image of the object is picked up by the iris image pick-up camera 2 simultaneously with the entrance of the object into the pan and tilt operation ranges of the camera 2. Consequently, it is possible to omit the face image pick-up to be carried out by the face image pick-up camera 3 in the first embodiment and an eye position detection processing based thereon. Thus, it is possible to considerably shorten a time taken for acquiring the iris image for the authentication.

While the pan turn of the iris image pick-up camera 2 is carried out by the mirror 13 and the pan motor 6 in the first and second embodiments, the iris image pick-up camera 2 may be turned directly, and furthermore, a reduction gear mechanism may be added. Although the iris image pick-up camera 2 and the face image pick-up camera 3 are turned by using the pan motor 6 and the tilt motor 7 to change the image pick-up direction in the first embodiment, moreover, the invention can also be applied to an iris image pick-up device having such a structure as to use and change over a plurality of cameras.

While the position of the eye of the object is calculated based on the head top portion of the silhouette image and the information about the distance to the object, the position of an ear or a shoulder in the image of the object may be calculated by pattern matching in place of the information about the distance, thereby computing the position of the eye which is obtained statistically from the head top portion and the position of the shoulder or the ear.

According to the invention, the direction of the image pick-up device for an authentication object image is changed into the direction of the target portion of the authenticated person which is obtained from the image picked up by the monitoring camera before the authenticated person enters the shooting range of the image pick-up device, and the image of the target portion of the authenticated person is picked up the moment that the authenticated person enters the shooting range. Consequently, it is possible to provide an authentication object image pick-up device capable of shortening a time taken for acquiring a necessary image for an authentication.

## Claims

1. An authentication object image pick-up device comprising:
face image pick-up device for picking up a face image of a person to be authenticated;
eye image pick-up device being pointed at a direction of an eye of the authenticated person, said direction is obtained by analyzing the face image of the authenticated person picked up by the face image pick-up device, for picking up an eye image of the authenticated person;
monitoring image pick-up device for picking up an image of a circumference of places in which the face image pick-up device and the eye image pick-up device are provided; and
control section for analyzing an image picked up by the monitoring image pick-up device to obtain a position of a face of the authenticated person, and pointing an image pick-up direction of the face image pick-up device at a direction of the face position before the authenticated person enters to a shooting range of the face image pick-up device.

2. An authentication object image pick-up device comprising:
eye image pick-up device for picking up an eye image of a person to be authenticated;
monitoring image pick-up device for picking up an image of a circumference of a place in which the eye image pick-up device is provided; and
control section for analyzing an image picked up by the monitoring image pick-up device to obtain a position of an eye of the authenticated person, and pointing an image pick-up direction of the eye image pick-up device at a direction of the eye position before the authenticated person enters to a shooting range of the eye image pick-up device.

3. The authentication object image pick-up device according to Claim 2,
wherein the control section obtains the eye position of the authenticated person from a position of a head top portion of the authenticated person acquired from the image picked up by the monitoring image pick-up device and information about a distance to the authenticated person acquired by distance measuring device.

4. The authentication object image pick-up device according to claim 2,
wherein the control section obtains the position of the eye from a position of a head top portion of the authenticated person which is acquired from the image picked up by the monitoring image pick-up device and a position of a shoulder or an ear of the authenticated person.

5. The authentication object image pick-up device according to Claim 1,
wherein the control section extracts an iris pattern or a retina pattern from the eye image.

6. The authentication object image pick-up device according to Claim 2,
wherein the control section extracts an iris pattern or a retina pattern from the eye image.

7. An authentication object image pick-up device comprising:
face image pick-up device for picking up a face image of a person to be authenticated;
monitoring image pick-up device for picking up an image of a circumference of a place in which the face image pick-up device is provided; and
control section for analyzing an image picked up by the monitoring image pick-up device to obtain a position of a face of the authenticated person, and pointing an image pick-up direction of the face image pick-up device at a direction of a position of the face before the authenticated person enters a shooting range of the face image pick-up device.

8. The authentication object image pick-up device according to Claim 7,
wherein the control section extracts a face feature pattern from the face image.

9. An authentication object image pick-up method comprising the steps of:
picking up, by monitoring image pick-up device, an image of a circumference of a place in which face image pick-up device for picking up a face image of a person to be authenticated is provided;
analyzing the image picked up by the monitoring image pick-up device to obtain a position of a face of the authenticated person;
pointing an image pick-up direction of the face image pick-up device at a direction of the position of the face before the authenticated person enters a shooting range of the face image pick-up device;
picking up a face image of the authenticated person by the face image pick-up device immediately when the authenticated person enters the shooting range; and
analyzing the face image of the authenticated person which is picked up by the face image pick-up device and picking up, by eye image pick-up device, an eye image of the authenticated person which is obtained.

10. An authentication object image pick-up method comprising the steps of:
picking up, by monitoring image pick-up device, an image of a circumference of a place in which eye image pick-up device for picking up an eye image of a person to be authenticated is provided;
analyzing the image picked up by the monitoring image pick-up device to obtain a position of an eye of the authenticated person;
pointing an image pick-up direction of the eye image pick-up device at a direction of the position of the eye before the authenticated person enters a shooting range of the eye image pick-up device; and
picking up an eye image of the authenticated person by the eye image pick-up device immediately when the authenticated person enters the shooting range.

11. The authentication object image pick-up method according to Claim 10,
wherein the position of the eye of the authenticated person is obtained from a position of a head top portion of the authenticated person which is acquired from the image picked up by the monitoring image pick-up device, and
wherein information about a distance to the authenticated person which is acquired by distance measuring device.

12. The authentication object image pick-up method according to Claim 10,
wherein the position of the eye is obtained from a position of a head top portion of the authenticated person which is acquired from the image picked up by the monitoring image pick-up device and a position of a shoulder or an ear of the authenticated person.

13. The authentication object image pick-up method according to Claim 9,
wherein an iris pattern or a retina pattern is extracted from the eye image.

14. The authentication object image pick-up method according to Claim 10,
wherein an iris pattern or a retina pattern is extracted form the eye image.

15. The authentication object image pick-up method according to Claim 11,
wherein an iris pattern or a retina pattern is extracted form the eye image.

16. An authentication object image pick-up method comprising the steps of:
picking up, by monitoring image pick-up device, an image of a circumference of a place in which face image pick-up device for picking up a face image of a person to be authenticated is provided;
analyzing the image picked up by the monitoring image pick-up device to obtain a position of a face of the authenticated person;
pointing an image pick-up direction of the eye image pick-up device at a direction of the position of the face before the authenticated person enters a shooting range of the face image pick-up device; and
picking up a face image of the authenticated person by the face image pick-up device immediately when the authenticated person enters the shooting range.

17. An authentication object image pick-up method according to Claim 16,
wherein a face feature pattern is extracted from the face image.
